# EUROPÄISCHE PATENTSCHRIFT

(11) **EP 2 342 211 B1**
(45) Veröffentlichungstag und Bekanntmachung des Hinweises auf die Patenterteilung: **04.12.2013**
(21) Anmeldenummer: 09783873.4
(22) Anmeldetag: 09.10.2009
(51) Int. Cl.: C07F 9/6574

(54) **VERFAHREN ZUR HERSTELLUNG VON 6-CHLORODIBENZO[D,F][1,3,2]-DIOXAPHOSPHEPIN**
METHOD FOR PRODUCING 6-CHLORODIBENZO[D,F][1,3,2]-DIOXAPHOSPHEPIN
PROCÉDÉ DE PRODUCTION DE 6-CHLORODIBENZOÝD,F¨Ý1,3,2¨-DIOXAPHOSPHÉPINE

(30) Priorität: 07.11.2008 DE 102008043582
(43) Veröffentlichungstag der Anmeldung: 13.07.2011
(73) Patentinhaber: Evonik Degussa GmbH, 45128 Essen (DE)
(72) Erfinder: FRIDAG, Dirk, 45721 Haltern am See (DE); FRANKE, Robert, 45772 Marl (DE); SCHEMMER, Bernhard, 45721 Haltern am See (DE); KREIDLER, Burkard, 45657 Recklinghausen (DE); WECHSLER, Bjoern, 46325 Borken (DE)
(86) Internationale Anmeldenummer: PCT/EP2009/063139
(87) Internationale Veröffentlichungsnummer: WO 2010/052090

(56) Entgegenhaltungen:
- WO-A1-2005/063776
- WO-A1-2008/124468
- WO-A1-2009/120210
- CN-A- 1 986 055
- ABDOU W ET AL: "Inhibition of Pseudorotation in Some Monocyclic Pentaoxyphosphoranes" PHOSPHORUS AND SULFUR AND THE RELATED ELEMENTS, GORDON AND BREACH - HARWOOD ACADEMIC, CH, Bd. 22, 1. Januar 1985 (1985-01-01), Seiten 99-107, XP008099059 ISSN: 0308-664X

## Beschreibung

Die Erfindung betrifft ein Verfahren zur Herstellung von 6-Chlorodibenzo[d,f] [1,3,2]-dioxaphosphepin, Verbindung 1.

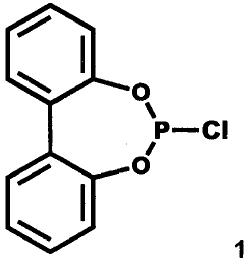

Verbindung 1 ist ein Baustein, der u. a. in der Ligandensynthese eine wichtige Rolle spielt.

Ein solcher Ligand ist z. B. die Verbindung 2, 6,6'-[(3,3'-Di-tert.-butyl-5,5'-dimethoxy-1,1'-biphenyl-2,2'-diyl)bis(oxy)]bis(dibenzo[d,f][1,3,2] dioxaphosphepin), kurz Biphephos genannt, die in übergangsmetallkatalysierten Reaktionen verbreitete Verwendung gefunden hat.

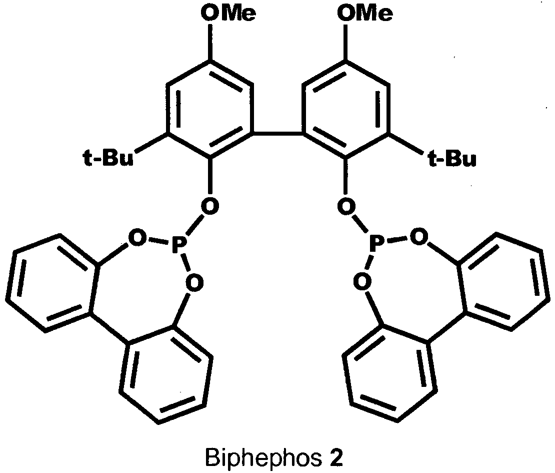

Die Verbindung 2 wird beispielsweise in der übergangsmetallkatalysierten Hydroaminomethylierung (E. Petricci, A. Mann, J. Salvadori, M. Taddei, Tetrahedron Letters 2007, 48, 8501-8504), der Hydrocyanierung (US 5,449,807), der Hydroformylierung (US 4,769,498, CN1986055), der Isomerisierung (US 5,440,067) und der Cyclohydrocarbonylierung (US 5,962,744) von Olefinen eingesetzt.

Die Garstellung von Verbindung 2 wird üblicherweise in 3 Syntheseschritten aus kommerziell verfügbaren Ausgangsmaterialien hergestellt: Zur Herstellung des Rückgrats wird 3-tert.-Butyl-4-hydroxyanisol oxidativ zur Biarylverbindung 3,3'-tert-Butyl-2,2'-dihydroxy-5,5'-dimethoxybiphenyl umgesetzt. Zur Herstellung der Seitenflügel wird Phosphortrichlorid mit 2,2'-Dihydroxybiphenyl zur Reaktion gebracht, um Verbindung 1 zu bilden. Schließlich werden die Reaktionsprodukte beider genannter Schritte miteinander in Gegenwart einer Base zu Verbindung 2, Biphephos, kondensiert.

Alle bisher bekannten Verfahren zur Herstellung von Verbindung 1 (6-Chlorodibenzo[d,f][1,3,2]-dioxaphosphepin) führen zur Bildung unerwünschter Nebenprodukte, damit einer reduzierten Ausbeute oder aber erfordern einen hohen energetischen oder zeitlichen Aufwand.

So wird in US 4,769,498 Phosphortrichlorid zu 2,2'-Dihydroxybiphenyl getropft, wobei phosphitische Nebenprodukte entstehen, die nur durch mehrstündiges, energieintensives thermisches Äquilibrieren weitgehend zurückgedrängt werden können (vgl. L. Anschütz, W. Marquardt, Chem. Ber. 1956, 89, 1119-1123) oder/und es muss eine aufwändige Vakuumdestillation des Produktes erfolgen, die entweder sehr hohe Temperaturen (ebenda sowie bei L. V. Verizhnikov und P. A. Kirpichnkov, Zh. Obshch. Khim., 1967, 37, 1355) oder großtechnisch schwierig zu realisierende Vakua von 130 Pa und weniger (EP 0 730 574 sowie V. N. Tsarev, A. A. Kabro, S. K. Moiseev, V. N. Kalinin, O. G. Bondarev, V. A. Davankov, K. N. Gavrilov, Russ. Chem. Bull., Int. Ed. Vol 53, 2004, 814-818) erfordern.

In CN 1986055 hingegen wird ein Überschuss an Phosphortrichlorid vorgelegt und 2,2'-Dihydroxybiphenyl hinzugefügt. Nähere Angaben über die Art und Weise der Zugabe, wie auch der Reaktionsführung, einer gegenüber Phosphortrichlorid derart hochreaktiven Verbindung, wie 2,2'-Dihydroxybiphenyl, werden jedoch nicht gemacht. Zur Abtrennung von Verbindung 1 aus dem Reaktionsgemisch und dessen weiterer Reinigung wird die Vakuumdestillation angewandt, wobei wiederum nähere Angaben, wie z. B. Druck- und Temperaturbereich, fehlen. Die Ausbeute an 1 beträgt 71 %. Eine nähere Charaktensierung von Verbindung 1 wird nicht offenbart.

Das in FR 2873696 sinngemäß vorgestellte Verfahren erfordert zum Erhalt ausreichender Selektivität eine energieintensive Kühlung der Reaktionsmischung auf 0 °C sowie zum Abfangen des entstehenden Chlorwasserstoffgases die Zugabe eines Amins mit den Folgen, dass ein Aminhydrochlorid entsteht, welches abfiltriert werden muss. Da die gesamte Reaktionsmischung jedoch hoch korrosiv ist, erfordert diese eine teure, da korrosionsarme Filtrationsapparatur, beispielsweise aus DIN 2.4610 Legierungen. Zudem muss der entstehende Aminhydrochloridabfall aufwändig entsorgt oder recyclisiert werden.

Die Autoren stellten weiterhin fest, dass bei dem von A. van Rooy, P. C. J. Kamer, P. W. N. M. van Leeuwen, K. Goubitz, J. Fraanje, N. Veldman und A. L. Spek in Organometallics 1996, 15, 835-847 vorgestellten Verfahren in Tetrahydrofuran die dort beschriebene Basenzugabe unerlässlich ist, da ansonsten bis zu 10 % an Nebenprodukten, die durch saure Spaltung des Tetrahydrofurans entstehen, gebildet werden können. Die notwendige Zugabe eines Amins erfordert jedoch wiederum die aufwändige Filtration und/oder eine Vakuumdestillation.

Weiterhin ist neben den Aspekten Produktausbeute sowie Reinheit für die sichere Durchführung des erfindungsgemäßen Verfahrens, insbesondere mit Blick auf die Umsetzung in ein industrielles Verfahren, entscheidend, dass die Zugabe des 2,2'-Dihydroxybiphenyl derart erfolgt, dass die Wärmeabfuhr dieser Kondensationsreaktion kontrolliert erfolgt.

In Zh. Obshch. Khim., 1967, 37, 1355 berichten L. V. Verizhnikov und P. A. Kirpichnkov über eine Verfahrensvariante, bei welcher die Edukte Phosphortrichlorid und 2,2'-Dihydroxybiphenyl bei Zimmertemperatur gemischt, zum Sieden erhitzt und anschließend per Hochvakuumdestillation das Produkt abgetrennt werden.

Da dort zwei hochreaktive Verbindungen direkt gemischt werden, kann das Kriterium der kontrollierten Wärmeabfuhr bei entsprechend großen Ansätzen nicht mehr garantiert werden. Die Wärmetönung der Reaktion beträgt -54 kJ/mol und ist damit stark exotherm. Die kontrollierte Wärmeabfuhr ist jedoch aus Sicherheitsgründen im industriellen Maßstab unbedingt erforderlich. Bei der direkten Mischung zweier hochreaktiver Verbindungen könnte ansonsten die gesamte Wärmemenge schlagartig freigesetzt werden. Diese Wärmemenge kann bei kleinen Laboransätzen noch gefahrlos abgeführt werden, bei Umsetzungen im industriellen Maßstab liegt hier jedoch ein erhebliches Gefahrenpotenzial.

Es bestand daher die Aufgabe, ein Verfahren zu entwickeln, das Verbindung 1 aus 2,2'-Dihydroxybiphenyl und Phosphortrichlorid in hoher Ausbeute und Reinheit bereitstellt, ohne auf energieintensive Äquilibrier- oder Kühlvorgänge zurückzugreifen und das ohne Produktdestillation, Basenzugabe oder Verwendung von Tetrahydrofuran auskommt. Im Idealfall ist das Verfahren lösemittelfrei und in großtechnischem Maßstäben sicher zu handhaben.

Es wurde gefunden, dass diese Aufgabe gelöst werden kann, indem man 2,2'-Dihydroxybiphenyl in flüssiger Form, vorzugsweise als Schmelze mittels beheizbarer Eduktvorlage, beheizbarer Pumpe sowie Leitung, zu Phosphortrichlorid zudosiert. Die erfolgt Zugabe unter Inertgas. Geeignete Inertgase sind zum Beispiel Stickstoff und sämtliche Edelgase (Helium, Neon, Argon, Krypton, Xenon, Radon), vorzugsweise wird Stickstoff eingesetzt. Die Zugabe von 2,2'-Dihydroxybiphenyl in einem Temperaturbereich von 110 bis 130 °C bei einem Druckbereich von 0,07 bis 0,12 MPa. Über die Steuerung der Zuflussrate von flüssigem 2,2'-Dihydroxybiphenyl zu Phosphortrichlorid wird ein sicheres Abführen der Reaktionswärme gewährleistet. Auf die Verwendung einer Base zum Abfangen des sich bildenden Chlorwasserstoffs kann verzichtet werden. Das entstehende Chlorwasserstoffgas wird stattdessen über eine Brüdenleitung beispielsweise in einen mit Natronlauge befüllten Abluftwäscher geleitet. Nach erfolgter Reaktion wird überschüssiges Phosphortrichlorid abgetrennt, vorzugsweise destillativ, wobei anschließend Verbindung 1 in quantitativer Ausbeute und Reinheiten größer gleich 98 % erhalten wird. Das abgetrennte Phosphortrichlorid wird recycliert und für eine neue Umsetzung verwendet.

Die Erfindung ist demnach ein Verfahren zur Herstellung von 6-Chlorodibenzo[d, f] [1,3,2]-dioxaphosphepin, welches folgende Schritte umfasst:
a) Zugabe von flüssigem 2,2'-Dihydroxybiphenyl in einen Reaktor zu einem Überschuss Phosphortrichlorid unter Inertgas und Rühren;
b) Ableitung und Neutralisierung der entstehenden Gase aus dem Reaktionsgemisch;
c) Abtrennen des überschüssigen Phosphortrichlorids, vorzugsweise nach Reaktionsende;
d) Erhalt von 6-Chlorodibenzo[d,f][1,3,2]-dioxaphosphepin, wobei die Zugabe des 2,2'-Dihydroxybiphenyl im Verfahrensschritt a) in geschmolzenem Zustand in einem Temperaturbereich von 110 bis 130 °C und in einem Druckbereich von 0,07 bis 0,12 MPa erfolgt.

Insbesondere liegt ein 2- bis 25-facher, vorzugsweise ein 10- bis 15-facher Überschuss an Phosphortrichlorid vor, bezogen auf molare Verhältnisse.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiel

In einer mit Stickstoff inertisierten und beheizbaren 1000 ml Eduktvorlage wurden 177,65 g (0,96 mol) 2,2'-Dihydroxybiphenyl vorgelegt, bei einem Druckbereich von 0,08 bis 0,12 MPa Druck auf einen Temperaturbereich von 110 bis 130°C erwärmt und zum Schmelzen gebracht. In einem mit Stickstoff inertisierten und thermostatisierbaren 6000 ml Reaktor wurden 1574 g (11,46 mol) Phosphortrichlorid vorgelegt. Der Reaktor wurde auf 20 °C thermostatisiert, gerührt und war über einen mit Natronlauge gefüllten Abluftwäscher an eine Membranpumpe angeschlossen. Es wurde ein Arbeitsdruck von 0,07 bis 0,09 MPa eingestellt, um entstehende Gase sicher über den Abluftwäscher abzuleiten. Innerhalb von 2,5 h pumpte man den Inhalt aus der Eduktvorlage mit einer beheizbaren Pumpe in den Reaktor. Nach erfolgter Zugabe rührte man 15 min bei 20 °C nach und erhält eine klare, schwach gelbe Lösung in dem Reaktor. Anschließend wurde der Reaktor auf bis zu 0,02 MPa evakuiert und bei 50 °C thermostatisiert. Überschüssiges Phosphortrichlorid wurde unter einer Stickstoff-Schutzgasatmosphäre abdestilliert. Während der Destillation wurde die Temperatur schrittweise auf 91 °C erhöht. Nach 1,5 h war die Destillation abgeschlossen und es verblieb eine farblose, hochviskose Flüssigkeit.

Ausbeute: > 99 % der Theorie. Reinheit: 98 %; ermittelt per GC/MS und ³¹P-NMR-Messung (500 MHz Hochfeldmessung mit 85 % Orthophosphorsäure als externen Standard, 1 gelöst in d8-Toluol) mit einer Verschiebung von δ = 185,21 ppm.

## Patentansprüche

1. Verfahren zur Herstellung von 6-Chlorodibenzo[d,f] [1,3,2]-dioxaphosphepin, welches folgende Schritte umfasst:
a) Zugabe von flüssigem 2,2'-Dihydroxybiphenyl in einen Reaktor zu einem Überschuss an Phosphortrichlorid unter Inertgas und Rühren;
b) Ableitung und Neutralisierung der entstehenden Gase aus dem Reaktionsgemisch;
c) Abtrennen des überschüssigen Phosphortrichlorids;
d) Erhalt von 6-Chlorodibenzo[d,f] [1,3,2]-dioxaphosphepin,
wobei die Zugabe des 2,2'-Dihydroxybiphenyl im Verfahrensschritt a) in geschmolzenem Zustand in einem Temperaturbereich von 110 bis 130 °C und in einem Druckbereich von 0,07 bis 0,12 MPa erfolgt.

2. Verfahren nach Anspruch 1, **dadurch gekennzeichnet, dass** das abgetrennte, überschüssige Phosphortrichlorid wieder dem Herstellprozess zugeführt wird.

3. Verfahren nach einem oder mehreren der Ansprüche 1 bis 2, **dadurch gekennzeichnet, dass** ein 2- bis 25-facher Überschuss an Phosphortrichlorid vorliegt.

## Claims

1. Process for preparing 6-chlorodibenzo[d,f]-[1,3,2]dioxaphosphepin, which comprises the following steps:
a) addition of liquid 2,2'-dihydroxybiphenyl to an excess of phosphorus trichloride under inert gas in a reactor and stirring;
b) discharge and neutralization of the resulting gases from the reaction mixture;
c) removal of the excess phosphorus trichloride;
d) isolation of 6-chlorodibenzo[d,f][1,3,2]dioxaphosphepin,
wherein the addition of the 2,2'-dihydroxybiphenyl in process step a) in the molten state is carried out in a temperature range from 110 to 130°C and in a pressure range from 0.07 to 0.12 MPa.

2. Process according to Claim 1, **characterized in that** the excess phosphorus trichloride which has been separated off is recirculated to the preparative process.

3. Process according to one or more of Claims 1 to 2, **characterized in that** a 2- to 25-fold excess of phosphorus trichloride is present.

## Revendications

1. Procédé pour la production de 6-chlorodibenzo-[d,f][1,3,2]-dioxaphosphépine, qui comprend les étapes suivantes :
a) addition de 2,2'-dihydroxybiphényle liquide à un excès de trichlorure de phosphore, dans un réacteur, sous gaz inerte et sous agitation ;
b) évacuation et neutralisation des gaz produits, à partir du mélange réactionnel ;
c) séparation du trichlorure de phosphore en excès,
d) obtention de 6-chlorodibenzo[d,f][1,3,2]-dioxa-phosphépine,
l'addition du 2,2'-dihydroxyphényle dans l'étape a) du procédé s'effectuant à l'état fondu, dans une plage de température de 110 à 130 °C et dans une plage de pression de 0,07 à 0,12 MPa.

2. Procédé selon la revendication 1, **caractérisée en ce que** le trichlorure de phosphore en excès, séparé, est renvoyé au processus de production.

3. Procédé selon une ou plusieurs des revendications 1 et 2, **caractérisé en ce qu'**un excès de 2 à 25 fois de trichlorure de phosphore est présent.
